Europäisches Patentamt

European Patent Office

Office européen des brevets

(19)

(11) Publication number: **0 125 669**
A2

(12) # EUROPEAN PATENT APPLICATION

(21) Application number: **84105396.0**

(22) Date of filing: **12.05.84**

(51) Int. Cl.³: **H 01 H 13/70**

(30) Priority: **16.05.83 US 494809**
**16.05.83 US 494810**

(43) Date of publication of application:
**21.11.84 Bulletin 84/47**

(84) Designated Contracting States:
**AT BE CH DE FR GB IT LI NL**

(71) Applicant: **KNOLL INTERNATIONAL, INC.**
**655 Madison Avenue**
**New York, N.Y. 10021(US)**

(72) Inventor: **Hannah, Bruce R.**
**6 Grandview Terrace**
**Cold Spring, N.Y. 10516(US)**

(72) Inventor: **Stephens, William I.**
**320 Cherry St.**
**East Greenville, PA 18041(US)**

(72) Inventor: **Wilmot, George**
**259 Spring Water Lane**
**New Canaan, CT 06840(US)**

(72) Inventor: **Armstrong, Eric C.**
**1028 Montgomery Avenue**
**Pennsburg, PA 18073(US)**

(72) Inventor: **Eldon, James B.**
**R.D. No. 1, Box 323**
**Barto, PA 19504(US)**

(72) Inventor: **Smith, Harold A.**
**R.D. No. 2, Box 35**
**Emmaus, PA 18049(US)**

(72) Inventor: **Campbell, Philip J.**
**2217 Montgomery Street**
**Bethlehem, PA 18017(US)**

(74) Representative: **Gudel, Diether, Dr. et al,**
**Patentanwälte Dr. V. Schmied-Kowarzik Dipl.-Ing. G.**
**Dannenberg Dr. P. Weinhold Dr. D. Gudel Dipl.-Ing. S.**
**Schubert Dr. P. Barz Grosse Eschenheimer Strasse 39**
**D-6000 Frankfurt am Main 1(DE)**

(54) Universal keyboard mount and adjustable keyboard support.

(57) A universal keyboard mount is disclosed utilizing a keyboard mounting plate and a carrier for that plate. The carrier has a cushioning section which cushions one surface of the keyboard. The keyboard mounting plate has a cushioning section which cushions an opposed surface of the keyboard. The keyboard mounting plate and carrier are adjustably positioned so that the cushioning sections thereof may move toward and away from each other. Bumpers adjustably mounted are utilized to prevent the keyboard from striking adjacent surfaces of the work surface as the keyboard mount is moved.

An adjustable keyboard support is also disclosed constituted by a rear housing that pivotally supports one end of a paralled link mechanism. A front housing is carried by the other end of the parallel link mechanism, and pivotally supports a keyboard mounting place. The parallel link mechanism permits upward and downward movement of the keyboard mounting plate without change of the tilt of that plate. A gas cylinder mechanism coupled to the front housing changes the vertical position of the same, and a slide plate adjustment mechanism provides forward and backward movement of the keyboard mounting plate.

BACKGROUND AND BRIEF DESCRIPTION OF THE INVENTION:

This invention relates to a universal keyboard mount. It has particular application to the mounting of a separable computer keyboard. It also relates to an adjustable keyboard support and is particularly directed to providing an adjustable support for a computer keyboard that may be stored under a work surface and moved from beneath that surface to a working position at any convenient orientation of the keyboard desired by an operator.

Mounts for positioning a computer keyboard are known. Most involve a simple surface onto which the keyboard is positioned and on which it is free to move without restraint. The present invention is directed to providing a universal keyboard mount, capable of mounting keyboards of varying sizes. Additionally, a keyboard mount in accordance with the present invention holds the keyboard firmly thereon and protects it from damage as the keyboard mount is moved.

The invention involves use of a keyboard mounting plate and a carrier for that plate. Both the carrier and the mounting plate have cushioning sections adapted to cushion opposed surfaces of the keyboard. The cushioning sections are movable toward and away from each other, so that keyboards of varying sizes may be cushioned and held. Additionally, adjustable-mounted bumpers are employed to protect the keyboard from damage as the keyboard mount is moved. The bumpers are preferably each mounted for movement along an axis and in a plane perpendicular to that axis. In this fashion a keyboard is advantageously cushioned and firmly held and protected from damage.

In one embodiment of the present invention, the bumpers comprise resilient balls, each mounted at one end of a rod that is bent to define an obtuse angle. The other end of the rod is carried by a support that permits adjustable movement of the rod both along the axis of that support and pivotally about that axis. The bumpers thus have considerable freedom of movement to be suitably positioned to protect various sized keyboards from striking adjacent work surfaces as the keyboard mount is moved.

The keyboard support of the present invention is particualarly important in applications where the keyboard mounting plate may itself be mounted for considerable movement, in which case it is essential to provide a secure mounting of the keyboard to the mounting plate.

Supports for adjustably positioning a separable keyboard are known. One is schematically described in the "The New Work-Station" by John Pile in Interiors, November 1982, pages 92, 93. The keyboard support disclosed in that article moves through a range of tilts to suit a user's needs and also moves up and down, independently of tilt angle, to bring the keyboard to a desired position. Mechanical linkages are shown in the schematic illustration in the article, and thus the user is required manually to move the keyboard support to all desired positions (raising and lowering). The present invention, on the other hand, utilizes a gas cylinder mechanism to provide the motive power in raising the keyboard support. Manual force is only required in the lowering of the keyboard support. Additionally, by utilizing a rear housing that is pivotally coupled to a slide plate that moves in and out on the underside of a work surface, in conjunction with a front housing that pivotally supports a keyboard mounting plate, with the front and rear housing being connected together by a parallel link mechanism that permits upward and downward movement of the keyboard mounting plate withouth change in the tilt of that plate, front and rear translation movement of the keyboard mounting plate and a change in the angular orientation thereof at any level of positioning of that mounting plate is achieved in the present invention.

The invention will be more completely understood by reference to the following detailed description, taken in conjunction with the appended drawings.

BRIEF DESCRIPTION OF THE DRAWINGS:

Fig. 1 is a perspective view, looking downwardly, of a universal keyboard mount and an adjustable keyboard support embodying the present invention.

Fig. 2 is an exploded perspective view, looking upwardly, of a part of the keyboard mount and support of Fig. 1.

Fig. 3 is an exploded perspective view showing the details of a parallel link mechanism incorporated in the universal keyboard mount and adjustable keyboard support of Fig. 1.

Fig. 4 is a schematic drawing illustrating the operation of the parallel link mechanism of Fig. 3.

Fig. 5 is an exploded perspective view of a part of the universal keyboard mount and adjustable keyboard support of Fig. 1, showing the details of a slide plate mechanism incorporated therein.

Fig. 6 is an exploded perspective view of a portion of the universal keyboard mount and adjustable keyboard support of Fig. 1, showing the details of the gas cylinder actuating the structure.

DETAILED DESCRIPTION:

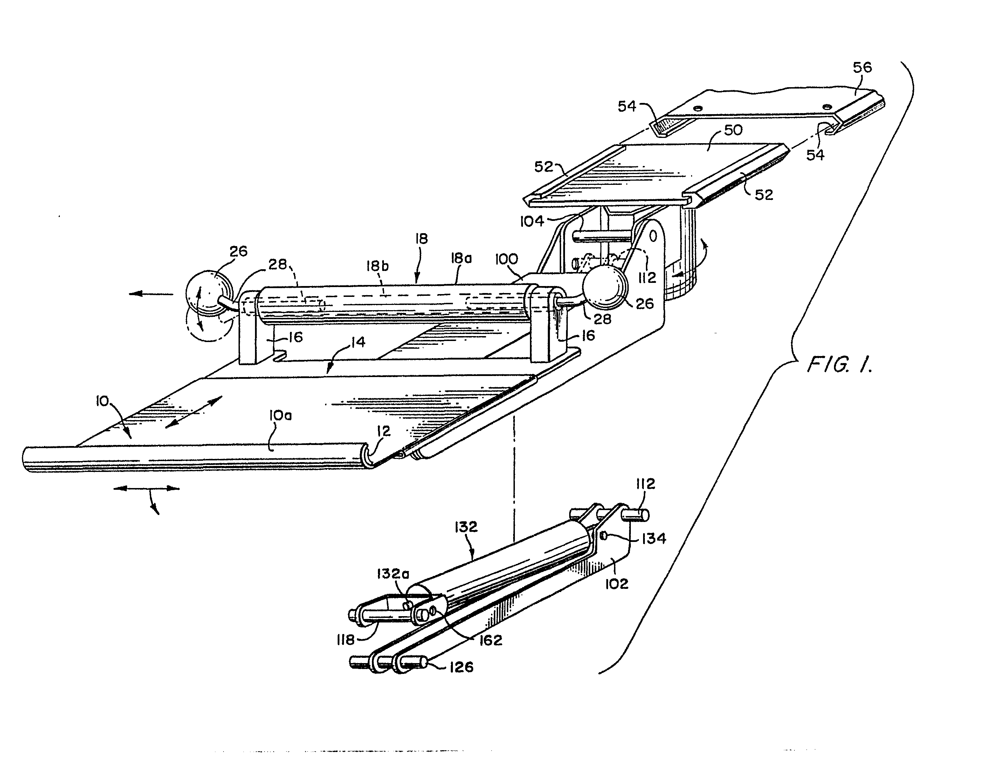

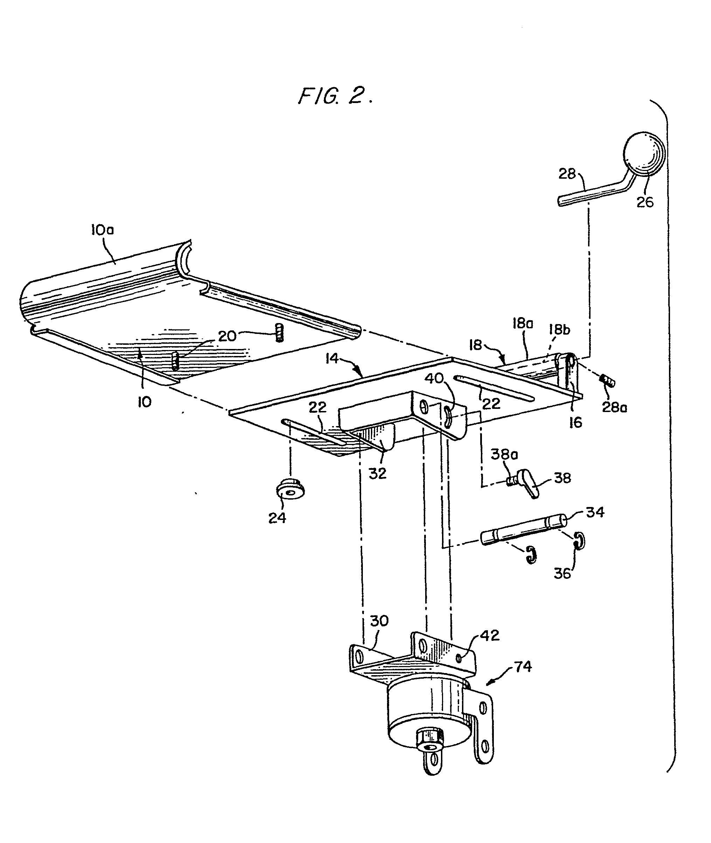

Referring to Fig. 1, a universal keyboard mount is shown that is constituted by a keyboard mounting plate 10 having a curled end 10a that carries a cushion pad 12 thereon. The cushion pad 12 is adapted to cushion one surface of a keyboard (not shown). The keyboard mounting plate 10 is carried by a carrier 14 (see also Fig. 2). The carrier 14 includes upstanding posts 16 which mount a carrier cushioning section 18 therebetween. The carrier cushioning section 18 may be formed from a resilient roll 18a mounted about an inner tube 18b. The cushioning member 18 cushions a surface of the keyboard that is opposed to the surface that is cushioned by the cushioning section 12 of the keyboard mounting plate 10.

The keyboard mounting plate 10 and the carrier 14 are held against each other with relative adjustable positioning by means of studs 20 which depend from the underside of the keyboard mounting plate 10. The studs 20 pass through corresponding slots 22 in the carrier 14. Locking knobs 24 which thread onto the ends of the studs 20 are tightened to hold securely the mounting plate 10 against the carrier 14 in any particular position, and are loosened to permit relative movement of the two cushioning sections 12 and 18 toward and away from each other by appropriate movement of the studs 20 in the slots 22.

Bumpers 26 are included which preferably constitute resilient balls, each mounted upon one end of a rod 28 that is bent to define an obtuse angle. The other end of each rod is carried by the tubing 18b that forms a support for the resilient cushioning roll 18a. Each rod 28 is thus moveable along the axis of the tubing 18b, and is also pivotal about that axis, held in position by set screw 28a. Thus the resilient bumpers 26 may be moved toward and away from each other (in a direction generally transverse to that of the movement of the cushioning sections 12 and 18), and additionally (by virtue of the pivotal movement) in planes generally perpendicular to the direction of movement of the bumpers toward and away from each other. The bumpers accordingly have a freedrom of movement along three orthogonal axes, and hence may be positioned as desired to protect various sized keyboards which may be mounted on the mounting plate against damage from impact with adjacent work surfaces as the mounting plate is moved.

The carrier 14 is advantageously mounted upon a support assembly 30 by means of a bracket 32 carried on the underside of the carrier 14. The bracket 32 is pinned to the assembly 30 by pin 34 (together with lock rings 36), and relative tilting of the carrier 14 (and concomitantly the keyboard mounting plate 10), is achieved by a tilt locking lever 38 which includes a threaded shaft 38a thereon which passes through slot 40 in brackets 32 and is threaded into a corresponding threaded hole 42 in the assembly 30. The locking lever 38 is loosened to permit appropriate tilting of the carrier 14, and then is tightened to maintain the tilt angle of the mounting plate 10.

As shown in Fig. 1, the keyboard mounting plate 10 and

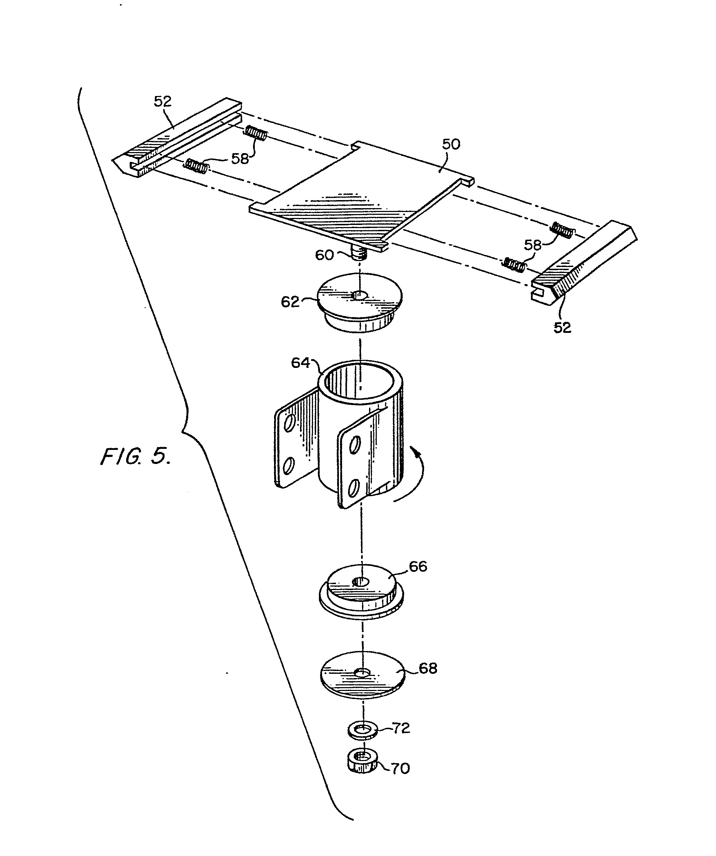

the carrier 14 are coupled to a slide plate 50. The sides of the slide plate 50 include spring-loaded bearing blocks 52 that ride in slide tracks 54 of a tracke plate 56 that may be mounted to the underside of a work surface. The details of the slide plate 50 and the bearing blocks 52 are shown in Fig. 5. As noted in that figure, the sides of the plate 50 are cut out to accomodate the bearing block 52, and springs 58 provide the spring loading that urge the bearing blocks against the sides of the tracks 54. The bearing blocks serve as sole bearing members and also as friction members.

The slide plate 50 and track plate 56 thus provide for movement of the keyboard mounting plate 10 forwardly and backwardly with respect to a work surface; friction or drag provided by the bearing blocks serves to semi-permanently position the plate 50 relative to plate 56. Appropriate stops (not shown) may be included, if desired, to prevent the complete removal of the bearing blocks 52 out of the tracks 54.

As noted from Fig. 5, the underside of slide plate 50 includes a stud 60 affixed thereto that passes respectively through an upper bearing 62, a rear housing 64, a lower bearing 66, and a bearing plate 68, finally to be threaded onto nut 70 held by lock washer 72. The bearings 62 and 66 provide for pivotal movement of the rear housing with respect to the slide plate 50 about an axis which is generally perpendicular to that slide plate, for the least about 180° of pivotal movement and preferably for 360° of pivotal movement. The importance of this pivotal movement of the rear housing will be described im more detail below.

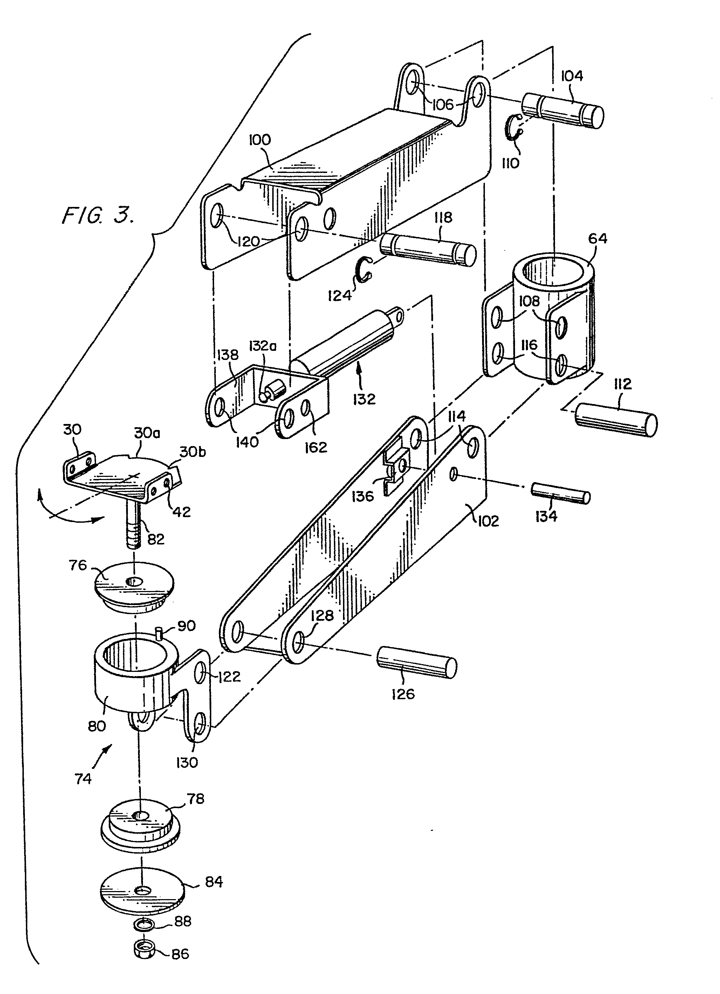

Referring to Fig. 2, it will be recalled that the keyboard mounting plate 10 is ultimately supported by assembly 30. That assembly 30 is in turn coupled to a front housing assembly 74, the details of which are shown in Fig. 3. Referring to that figure, the front housing assembly 74 includes, in addition to the support assembly 30, upper and lower bearings 76 and 78 on opposite sides of a front housing 80. The support assembly 30 includes a stud 82 which depends downwardly therefrom and passes through these bearings and front housing, in addition to a bearing plate 84 held by nut 86 and lock washer 88. The front housing 80 is thus free to pivot with respect to the support assembly 30. That pivotal movement is limited by a stop pin 90 that strikes ends 30a and 30b of a cut-away portion of the plate that constitutes the support assembly 30. The front housing 80 is thus free to pivot about an axis which is coextensive with the stud 82 for at least about 90° of movement about that axis. The axis of the stud 82 is paralled to the axis of pivotal movement of the rear housing 64 described above. Again, the significance of the pivoting movement of the front housing will be described in more detail below.

As shown in Fig. 3, a parallel link mechanism couples together the rear housing 64 and the front housing 80. Specifically, an upper arm 100 and a lower arm 102 constitute the two links of the parallel link mechanism. The upper arm 100 is pivotally coupled by a pivot pin 104 to the rear housing 64. The pivot 104 extends through holes 106 in the upper arm 100 and holes 108 in the rear housing 64, and is held in place by clips 110. Similarly, the lower arm 102 is pivotally coupled to the rear housing 64 by pin 112, which passes through holes 114 in the lower arm and holes 116 in the rear housing. The upper arm 100 is pivotally coupled to the front housing 80 by pin 118, which passes through holes 120 in the front portion of the upper arm 100 and upper holes 122 in the front housing 80. The pin 118 is maintained in place by clip 124. Similarly, the front end of the lower arm 102 is pivotally coupled to the front housing 80 by pin 126 which passes through holes 128 in the front of the lower arm 102 and lower holes 130 in the front housing 80. A gas cylinder mechanism 132 completes the coupling of rear housing 64 to front housing 80. Specifically, gas cylinder 132 is pivotally connected at one end thereof by pin 134 to a rear portion of the lower arm 102 adjacent to the holes 114. A centering structure 136 is included on both sides of the plates that constitute the sides of the lower arm 102 for the purpose of centering the gas cylinder between those plates. The front end of the gas cylinder 132 (the moveable piston in the gas cylinder) is coupled to a bracket 138. That bracket includes holes 140 therein through which the pin 118 passes. Thus, the moveable piston in the gas cylinder is coupled to the front housing 80 via the pin 118.

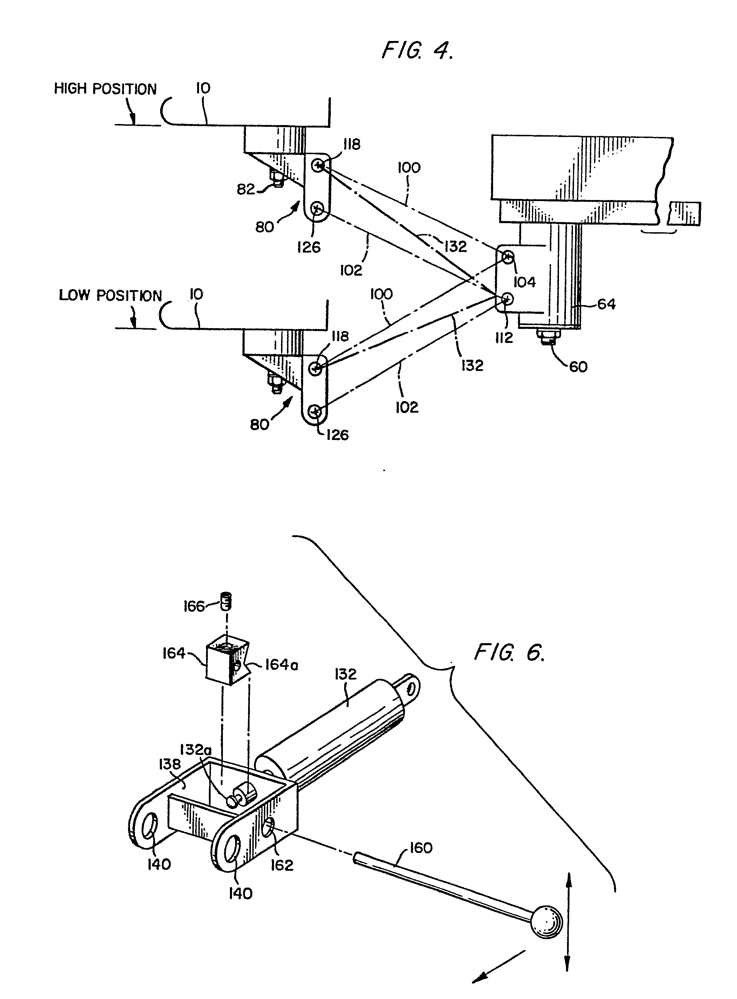

The action of the mechanism coupling the rear housing 64 to the front housing 80 is best understood by reference to Fig. 4. The upper arm 100 and lower arm 102 form parallel links. There are two positions of the keyboard mounting plate 10 shown, namely, a high position and a low position. Because of the parallel links 100 and 102, and the pivotal connections provided by the pins 104, 112, 118, and 126, the tilt of the keyboard mounting plate 10 remains constant for all vertical positions of the front housing 80. This action occurs because the upper arm 100 and lower arm 102 form constant radii governing the arcuate movement of the pins 118 and 126 coupled to the front housing 80, pivoting about centers determined by the pins 104 and 112 in the rear housing 64.

Referring now to Figs. 1 and 4 together, the significance of the various axes of pivotal movement of the rear housing 64 and the front housing 80 will now be perceived. The rear housing 64 pivots preferably 360° about the axis 60 (this is the axis of the same-numbered stud in Fig. 5). Thus the rear housing 64 is free to pivot about an axis which is generally perpendicular to the slide plate 50. When it is desired to store the keyboard mounting plate entirely underneath the work surface, the slide plate 50 may be moved to its rearward-most position, and the rear housing 64 pivoted to the extent necessary to pivot the entire keyboard support plate assembly underneath the work surface. The pivotal movement of the front housing 80, on the other hand, about axis 82 (which is the axis of the stud 82 in Fig. 3) provides for pivotal movement of the front housing about an axis which is parallel to that of the pivotal movement of the rear housing 64. This pivotal movement of the front housing 80 is for the purpose of pivoting the keyboard mounting plate 10 to any desired position in use. Normally, only 90° of a pivoting movement of the front housing is required, and for this reason the stop pin 90 is included, as described above (with respect to Fig. 3). The two angular pivoting movements of the front and rear housings, together with the forward/backward movement of the slide plate 50 provide the necessary movement of the keyboard mounting plate 10 to provide any positioning of that plate desired by a computer operator.

The gas cylinder mechanism participates in the movement of the keyboard mounting plate 10 by providing for the raising and lowering of the front housing 80. With reference to Fig. 6, a gas cylinder activating rod 160 is included that passes through a hole 162 in the bracket 138. The activating rod 160 is fastened to a cam 164 by means of a set screw 166. Movement of the activating rod 160 moves the cam 164, which includes a dished surface 164a thereon that bears against activating button 132a of the gas cylinder. Appropriate movement of the activating rod 160 results in actuation of the gas cylinder activating button, in turn permitting the piston in the gas cylinder to move. When the keyboard mounting plate 10 is in the low position shown in Fig. 4, activation of the gas cylinder 132 results in the raising of the mounting plate by outward movement of the piston in the gas cylinder. On the other hand, when it is desired to lower the keyboard mounting plate 10, the gas cylinder is activated by appropriate manipulation of the activating rod 160, and manual force is used to lower the keyboard mounting plate 10 to the desired position.

By use of a gas cylinder mechanism, upward and downward movement of the keyboard mounting plate 10 is easily achieved. A cumbersome spring mechanism normally found in assemblies of this type is avoided by use of the gas cylinder mechanism, and manual force is only required in the lowering of the keyboard mounting plate, upward movement being carried out automatically by the gas cylinder mechanism. The pivotal movement of the front and rear housing in connection with the sliding movement of the slide plate together provide for accurate positioning of the keyboard mounting plate any number of unlited positions and orientations of that mounting plate in front of and below a work surface.

It will be appreciated that modifications of the presently-preferred embodiment described above may be made by those skilled in the art. Accordingly, this invention should be taken to be defined by the appended claims.

WHAT CLAIMED IS:

1. A universal keyboard mount comprising a keyboard mounting plate, a carrier for said keyboard mounting plate, said carrier having a cushioning section thereof adapted to cushion one surface of a keyboard, said keyboard mounting plate having cushioning section thereof adapted to cushion an opposed surface of said keyboard, and means mounting said keyboard mounting plate and said carrier for adjustable positioning of said cushioning sections thereof toward and away form each other, so as to engage firmly said keyboard.

2. A universal keyboard mount as in claim 1, including bumpers adjustably mounted on one of said carrier and said keyboard mounting plate for preventing said keyboard from impact with a work surface as said keyboard mounting plate is moved.

3. A universal keyboard mount as in claim 2, in which said bumpers are mounted for movement toward and away from each other.

4. A universal keyboard mount as in claim 3, in which said bumpers are mounted for additional movement in planes generally perpendicular to the direction of movement of said bumpers toward and away form each other.

5. A universal keyboard mount as in claim 4, in which each of said bumpers comprises a resilient ball mounted at one end of a rod bent to define an obtuse angle, the other end of said rod being carried by a support therefor that permits adjustable movement of said other rod end both along an axis and
pivotally about said axis.

6. A universal keyboard mount as in claim 5,
   in which said support for said bumper rod other ends
   comprises a tubing, the opposite ends of which carry
   said other ends of said rods.

7. A universal keyboard mount as in claim 6,
   in which said tubing supports one of said cushioning
   sections.

8. A keyboard mount comprising a keyboard mounting plate,
   and bumpers of resilient material for protecting a keyboard mounted upon said mounting plate from striking
   adjacent work surfaces as said mounting plate is moved,
   said bumpers each being adjustably mounted for movement
   along an axis and in a plane generally perpendicular
   to said axis.

9. A keyboard mount as in claim 8,
   in which said bumper  movement axes are coextensive
   so that movement of said bumpers along said axes
   results in movement of said bumpers toward and away
   from each other.

10. A keyboard mount as in claim 8,
    in which each of said bumpers comprises a resilient
    ball mounted at one end of a rod bent to define an
    obtuse angle, the other end of said rod being carried
    by a support therefor that permits adjustable movement
    of said other rod end both along said axis and pivotally
    about said axis.

0125669

- 3 -

11. A keyboard mount as in claim 10,
in which said support for said bumper rod other ends
comprises a tubing,the opposite ends  of which carry
said other ends of said rods.

12. A keyboard mount as in claim 11,
in which said tubing supports a cushioning section that
engages said keyboard.

13. An adjustable keyboard support comprising a rear
housing for pivotally supporting one end of a parallel
link mechanism, a front housing carried by the other
end of said parallel linke mechanism and pivotally
supporting a keyboard mounting plate, said parallel
link mechanism permitting upward and downward movement
of said keyboard mounting plate withouth change in the
tilt of said keyboard plate, and a gas cylinder mechanism
coupled to said front housing for changing the vertical
position of the same.

14. An adjustable keyboard support as in claim 13,
in wich said rear housing is carried by a slide plate
adapted to be mounted on the underside of a work surface
for sliding movement with respect thereto.

15. An adjustable keyboard support as in claim 14,
in which said rear housing is pivotally carried by said
slide plate for at least about 180° of movement about
a first axis generally perpendicular to said slide
plate.

16. An adjustable keyboard support as in claim 15, in which said front housing pivotally supports said keyboard mounting plate for at least about 90° of movement about a second axis generally paralled to said first axis.

17. An adjustable keyboard support as in claim 16, including a tilt adjustment mechanism mounting said keyboard mounting plate to said front housing and permitting adjustment of the tilt angle of said keyboard mounting plate.

18. An adjustable keyboard support as in claim 14, in which said slide plate includes bearing blocks at the sides thereof, and a slide track on each side of said slide plate carrying said bearing blocks for sliding movement therein, said bearing blocks being spring-loaded against said slide tracks.

19. A slide plate adjustment mechanism comprising a slide track plate having a pair of slide tracks along the sides thereof, a slide plate having bearing blocks along the sides thereof that ride in said tracks and which are spring-biased against said tracks, said bearing blocks serving as (1) sole bearing surface between said slide plate and slide track plate so that said slide plate be moved relative to said slide track plate, and (2) friction members which provide a drag dependent upon the bearing characteristics of the material of said bearing blocks and the spring biasing force to permit semi-permanent positioning of said slide plate relative to said slide track plate.

20. A slide plate adjustment mechanism as in claim 19, in which said bearing blocks are of nylon material.

Attorney for the Applicant:

Dr. D. Gudel

0125669

FIG. I.

FIG. 2.

Knoll International, Inc.

0125669

FIG. 3.

0125669

## FIG. 4.

HIGH POSITION

10

118

82

100

80

126

132

102

104

LOW POSITION

10

100

64

118

80

112

132

126

102

132

60

## FIG. 6.

166

164

164a

132

132a

138

140

162

140

160

Knoll International, Inc.

0125669

FIG. 5.